Europäisches Patentamt

European Patent Office

Office européen des brevets

(19)

(11) Veröffentlichungsnummer: **0 006 129**
**A1**

(12) # EUROPÄISCHE PATENTANMELDUNG

(21) Anmeldenummer: 79101461.6

(22) Anmeldetag: 12.05.79

(51) Int. Cl.³: **B 60 Q 3/02**

(30) Priorität: 21.06.78 DE 2827117
27.10.78 DE 2846751
27.10.78 DE 2846752

(43) Veröffentlichungstag der Anmeldung: 09.01.80
Patentblatt 80/1

(84) Benannte Vertragsstaaten: AT CH FR GB IT NL SE

(71) Anmelder: Voll, Walter, Ing. grad., Nikolaus-Fey-Strasse 2, D-8728 Hassfurt (DE)

(72) Erfinder: Voll, Walter, Ing. grad., Nikolaus-Fey-Strasse 2, D-8728 Hassfurt (DE)

(74) Vertreter: Gaiser, Hartmut, Dipl.-Ing., Sulzbacher Strasse 39, D-8500 Nürnberg (DE)

(54) **Verzögerungsschaltung für die Innenraumbeleuchtung eines Kraftfahrzeugs.**

(57) Die Verzögerungsschaltung einer Innenraumbeleuchtung eines Kraftfahrzeugs ist über einen Türkontakt einzuschalten. Die Verzögerungszeit läßt sich durch ein RC-Glied bestimmen.

Eine derartige Schaltung soll die übliche Funktion der Innenraumbeleuchtung nicht beeinträchtigen und einfach an das Bordnetz des Kraftfahrzeugs anzuschließen sein. Es wird hierfür das RC-Glied und ein Schaltverstärker parallel zu einem Türkontakt gelegt. Die beim Öffnen des Türkontakts am durchgeschalteten Schaltverstärker abfallende Restspannung lädt den Kondensator des RC-Gliedes. Diese Restspannung ist einerseits größer als die Schwellwertspannung eines Schwellwertschalters und andererseits so klein, daß die Differenzspannung zwischen der Batteriespannung und der Restspannung zum Betrieb der Lichtquelle ausreicht.

Durch einen einzigen zusätzlichen Schaltungsanschluß kann bei eingeschalteter Außenbeleuchtung die Verzögerungszeit wesentlich verkürzt werden. Außerdem kann durch einen weiteren einzigen Schaltungsanschluß bei eingeschalteter Außenbeleuchtung ein Warnsignal abgegeben werden.

## Verzögerungsschaltung für die Innenraumbeleuchtung eines Kraftfahrzeugs

Die Erfindung betrifft eine Verzögerungsschaltung für eine Innenraumbeleuchtung eines Kraftfahrzeugs, die an die Kraftfahrzeugbatterie angeschlossen und über einen Türkontakt einzuschalten ist und bei der zur Festlegung der Verzögerungszeit bis zum Abschalten einer Lichtquelle ein RC-Glied vorgesehen ist, das das Schalten eines in Reihe zur Lichtquelle geschalteten elektronischen Schaltverstärkers steuert.

Üblicherweise ist die Schaltung der Innenraumbeleuchtung eines Kraftfahrzeugs so ausgelegt, daß sie sofort erlischt, wenn die den Türen des Kraftfahrzeugs zugeordneten Türkontakte geöffnet werden. Dies hat zur Folge, daß sich der Fahrer bei Dunkelheit sowohl nach dem Einsteigen in das Kraftfahrzeug als auch bei dessen Verlassen im Dunkeln befindet.

Um diese Unzulänglichkeit zu vermeiden, ist in der US-PS 3 221 211 eine Verzögerungsschaltung der eingangs genannten Art vorgeschlagen. Bei dieser schaltet ein Türkontakt über einen monostabilen Multivibrator eine Lichtquelle, die einige Zeit nach dem Öffnen der Kraftfahrzeugtür weiterleuchtet. Die in der US-PS 3 221 211 vorgeschlagene Schaltung eignet sich nicht ohne weiteres zur Ergänzung der in einem Kraftfahrzeug üblicherweise vorgesehenen Schaltung der Innenraumbeleuchtung. Entweder wäre hierfür die Verschaltung der vorhandenen Lichtquelle zu ändern, wobei deren übliche Funktion verloren ginge, oder es wäre eine zusätzliche Lichtquelle vorzusehen.

In der US-PS 4 071 805 ist eine Verzögerungsschaltung für die Innenraumbeleuchtung eines Kraftfahrzeugs gezeigt, bei der ein verzögertes Abschalten der Lichtquelle nach dem Schließen eines Türkontakts mittels einer Reihenschaltung des Türkontakts, eines Schaltverstärkers und einer Relaiswicklung erreicht wird, wobei die Verzögerungszeit durch ein zum Schaltverstärker paralleles RC-Glied erreicht wird und die Relaiswicklung einen zum Türkontakt parallelen Schalter betätigt. Abgesehen davon, daß der Einsatz eines Relais die Schaltung teuer macht, ist bei der US-PS 4 071 805 ungünstig, daß die Schaltung an wenigstens drei Pole des Bordnetzes angeschlossen werden muß.

In der US-PS 3 916 250 ist eine Verzögerungsschaltung für die Innenraumbeleuchtung eines Kraftfahrzeugs beschrieben, bei der die Verzögerungsfunktion nicht mittels der Türkontakte, sondern mittels zusätzlicher, am Griff der Fahrzeugtür angebrachter Kontakte geschaltet wird. Es soll in erster Linie erreicht werden, daß die Innenraumbeleuchtung vor dem Einsteigen in das Fahrzeug eingeschaltet werden kann. Auch diese Schaltung arbeitet mit einem Relais und erfordert abgesehen von den zusätzlichen Schaltkontakten drei Anschlüsse.

Aufgabe der Erfindung ist es, eine Verzögerungsschaltung der eingangs genannten Art vorzuschlagen, die die übliche Funktion der in einem Kraftfahrzeug serienmäßig vorgesehenen Innenraumbeleuchtungsschaltung nicht beeinträchtigt und für die Steuerung der Verzögerung nur eine Anschlußleitung und einen Masseanschluß benötigt.

Erfindungsgemäß ist obige Aufgabe dadurch gelöst, daß das RC-Glied und der Schaltverstärker, der vom RC-Glied über einen Schwellwertschalter steuerbar ist, parallel zu einem Türkontakt liegen, wobei die Lichtquelle in Reihe zu dem Türkontakt an die Kraftfahrzeugbatterie angeschlossen ist, daß die beim Öffnen des Türkontakts am durchgeschalteten Schaltverstärker abfallende Restspannung den Kondensator des RC-Gliedes lädt und daß diese Restspannung einerseits größer als die Schwellwertspannung des Schwellwertschalters und andererseits so klein ist, daß die Differenzspannung zwischen der Batteriespannung und der Restspannung zum Betrieb der Lichtquelle ausreicht. Beim Schließen eines der Türkontakte, d.h. dem Öffnen der betreffenden Tür, leuchtet die Lichtquelle auf. Der Kondensator entlädt sich über den geschlossenen Türkontakt. Beim nachfolgenden Schließen der Tür, d.h. nach dem Einsteigen oder Aussteigen, ist der Türkontakt geöffnet. Die Lichtquelle erlischt jedoch nicht sofort, da durch sie über den Schaltverstärker Strom fließt. Gleichzeitig lädt sich der Kondensator mit der am Schaltverstärker abfallenden Restspannung. Sobald die Schaltspannung des Schwellwertschalters erreicht ist, wird der Schaltverstärker gesperrt. Die Lichtquelle erlischt jetzt. Es ist also erreicht, daß die Lichtquelle nach dem Schließen der Kraftfahrzeugtür eine gewisse Zeit, beispielsweise 10 s, weiterleuchtet. Der Fahrer kann also nach dem Einsteigen notwendige Vorgänge, wie beispielsweise das Einstecken des Zündschlüssels und das Schließen des Sicherheitsgurts, bei Licht durchführen, ohne daß er hierfür die Innenraumbeleuchtung manuell zu betätigen hat. Nach dem Verlassen des Kraftfahrzeugs kann sich der Fahrer in der Umgebung des Kraftfahrzeugs orientieren, beispielsweise um in einer dunklen Garage den Lichtschalter der Garagenbeleuchtung aufzufinden oder das Kofferraumschloß des Kraftfahrzeugs zu öffnen.

Vorteilhaft ist bei der Erfindung, daß diese Verzögerungsschaltung an nur einem Pol mit der Innenraumbeleuchtung bzw. dem Türkontakt zu verbinden ist und mit dem anderen Pol an Masse zu legen ist. Durch diese einfache Installationsmöglichkeit eignet sich die Verzögerungsschaltung sowohl für die Erstausstattung als auch zum Nachrüsten eines Kraftfahrzeugs.

Außerdem ist erreicht, daß nicht für jede Tür eine eigene Verzögerungsschaltung vorgesehen sein muß, sondern eine einzige Verzögerungsschaltung auf alle Türkontakte in gleicher Weise reagiert.

Die Verzögerungsschaltung lässt sich als kleine Baueinheit aufbauen, die in ein Kunstharz einzugießen ist, so daß weder Unterbringungsschwierigkeiten bestehen, noch Korrosionsschäden zu befürchten sind.

In bevorzugter Ausgestaltung der Erfindung ist einer der beiden Anschlüsse der Verzögerungsschaltung ein Massepol, der als festes Kontaktstück an einem die Verzögerungsschaltung aufnehmenden Gehäuse ausgebildet ist. Es lässt sich damit die Verzögerungsschaltung mit nur einer Schraube am Kraftfahrzeug befestigen und erden. Zum vollständigen elektrischen Anschluß ist lediglich eine einzige Leitung mit dem dem Massepol abgewandten, an der Innenraumbeleuchtung liegenden Kontakt des Türkontakts zu verbinden.

In vorteilhafter Weiterbildung der Erfindung ist zwischen den Türkontakt und den Spannungspol des Kondensators eine Diode geschaltet, über die sich der Kondensator beim Schließen des Türkontakts entlädt. Über die Diode kann sich der Kondensator schnell entladen, so daß nicht verlangt werden muß, daß die Tür wenigstens kurze Zeit offen zu halten ist. Ist die Diode nicht vorgesehen, dann entlädt sich der Kondensator bei geschlossenem Türkontakt, also geöffneter Tür, über den Widerstand des RC-Gliedes. In diesem Fall muß zur Entladung die Tür eine gewisse Zeit, beispielsweise 20 s, geöffnet bleiben.

Eine Weiterbildung der erfindungsgemäßen Verzögerungsschaltung ist dadurch gekennzeichnet, daß parallel zum Widerstand des RC-Gliedes eine Zenerdiode geschaltet ist, deren Zenerspannung größer als die Restspannung des Schaltverstärkers aber kleiner

- 6 -

als die Batteriespannung ist. Wesentliche Vorteile
dieser Weiterbildung bestehen in folgendem:

a) Hat die Innenraumbeleuchtung einen Kurzschluß
oder wird die Schaltung fehlerhaft in das Kraftfahrzeug eingebaut, dann wird über die Zenerdiode
der Kondensator geladen und der Schaltverstärker
dementsprechend gesperrt, so daß durch diesen
kein Strom fließen kann, der ihn zerstören könnte.

b) Im normalen Betriebsfall schaltet der Schaltverstärker nur dann durch, wenn die Lichtquelle
leuchtet, so daß der Schaltverstärker nur auf
denjenigen Widerstandswert ausgelegt werden muß,
der bei warmer Glühlampe der Innenraumbeleuchtung
vorliegt. Beim erstmaligen Anschließen der Verzögerungsschaltung an die Kraftfahrzeugbatterie
oder bei einem Einbau der Kraftfahrzeugbatterie
muß der Schaltverstärker die Lichtquelle im kalten Zustand schalten, wobei in diesem Fall der
Widerstandswert der Lichtquelle wesentlich niedriger ist als im warmen Zustand. Der Schaltverstärker müßte also auf einen entsprechend hohen
Strom ausgelegt sein. Die Zenerdiode führt auch
in diesem Fall zu einer sehr raschen Ladung des
Kondensators, so daß dementsprechend der Schaltverstärker abgeschaltet wird und eine Zerstörung
nicht zu befürchten ist.

c) Nach Ablauf der Verzögerungszeit schaltet der
Schaltverstärker die Lichtquelle ab. Durch die
Zenerdiode ist der Abschaltvorgang wesentlich
beschleunigt, so daß die Verlustleistung des

- 7 -

- 7 -

Schaltverstärkers entsprechend reduziert ist.

d) Außerdem leitet die Zenerdiode auch Spannungsspitzen, insbesondere positive Spannungsspitzen ab, wodurch die elektronischen Schaltungsteile geschützt sind.

Die erfindungsgemäße Verzögerungsschaltung kann so ausgestaltet werden, daß sie die Schaltzustände weiterer Schalter, insbesondere Außenlichtschalter, des Kraftfahrzeugs erfasst und zur Warnanzeige bei nicht abgeschalteter Außenbeleuchtung verarbeitet. Dies lässt sich dadurch erreichen, daß ein dritter Schaltungsanschluß vorgesehen ist, der an den elektrischen Verbindungspunkt zwischen einem Lichtschalterkontakt des Kraftfahrzeugs und der diesem zugeordneten Lichtquelle angeschlossen ist, und daß zwischen dem ersten, an der Innenraumbeleuchtung liegenden und dem dritten Schaltungsanschluß ein Signalgeber in Reihe mit der Schaltstrecke eines elektronischen Schalters liegt, der über den dritten Schaltungsanschluß gesteuert ist. Wenn einer der Türkontakte des Kraftfahrzeugs durch Öffnen einer Tür geschlossen wird und ein Lichtschalterkontakt geschlossen ist, also die Außenbeleuchtung des Fahrzeugs leuchtet, gibt der Signalgeber ein Signal, beispielsweise einen Warnton, ab und die Innenraumbeleuchtung leuchtet. Nach dem Schließen der Tür ist der Stromkreis des Signalgebers unterbrochen, die Innenraumbeleuchtung jedoch leuchtet eine bestimmte Zeit weiter.

Der Schließzustand eines an einem dritten Schaltungsanschluß anliegenden Lichtschalterkontakts wird in

- 8 -

bevorzugter Ausgestaltung der Erfindung dazu genutzt, die Innenraumbeleuchtung nicht nachleuchten zu lassen. Ein Nachleuchten der Innenraumbeleuchtung ist unerwünscht, wenn die Außenbeleuchtung brennt. Nachts soll nicht mit leuchtender Innenraumbeleuchtung gefahren werden. In Ausgestaltung der Erfindung ist hierfür zwischen dem dritten Schaltungspol und einem Ladekondensator des RC-Gliedes ein Schaltungszweig mit einem Widerstand und einer Diode gelegt, über den der Ladekondensator zu laden ist.

In Weiterbildung der Erfindung weist das Gerät einen vierten Schaltungsanschluß auf, der am Zündschloß des Kraftfahrzeugs anzuschließen ist, und zwischen dem vierten und dem ersten Schaltungsanschluß liegt ein weiterer elektronischer Schalter, der über den vierten Schaltungsanschluß gesteuert ist und den anderen elektronischen Schalter steuert. Damit ist erreicht, daß der Signalgeber nur dann eingeschaltet wird, wenn das Zündschloß abgeschaltet ist. Ein besonderer Kontakt am Zündschloß ist hierfür nicht erforderlich.

Ein wesentlicher Vorteil der Erfindung besteht darin, daß für die erwähnten Schaltfunktionen nur ein einziges Gerät vorgesehen ist. Insbesondere wirkt sich günstig aus, daß die gesamte elektronische Schaltung auf einer einzigen Leiterplatte mit wenigen Anschlüssen untergebracht werden kann. Dies führt sowohl bei den Herstellungskosten als auch bei den Kosten für den Einbau des Geräts zu Ersparnissen.

Weitere vorteilhafte Ausgestaltungen der Erfindung ergeben sich aus der folgenden Beschreibung von Ausführungsbeispielen. In der Zeichnung zeigen:

Fig. 1 einen Schaltplan einer Verzögerungsschaltung
für die Innenraumbeleuchtung eines Kraftfahrzeugs,

Fig. 2 einen Montageplan der Verzögerungsschaltung,

Fig. 3 ein weiteres Ausführungsbeispiel der Verzögerungsschaltung,

Fig. 4 ein Ausführungsbeispiel entsprechend Fig. 3
mit anderem Schaltverstärker,

Fig. 5 ein weiteres Ausführungsbeispiel,

Fig. 6 eine Ausführung der Schaltung nach Fig. 5
als integrierte Schaltung und

Fig. 7 einen Schaltplan eines weiteren Ausführungsbeispiels mit einer Warneinrichtung.

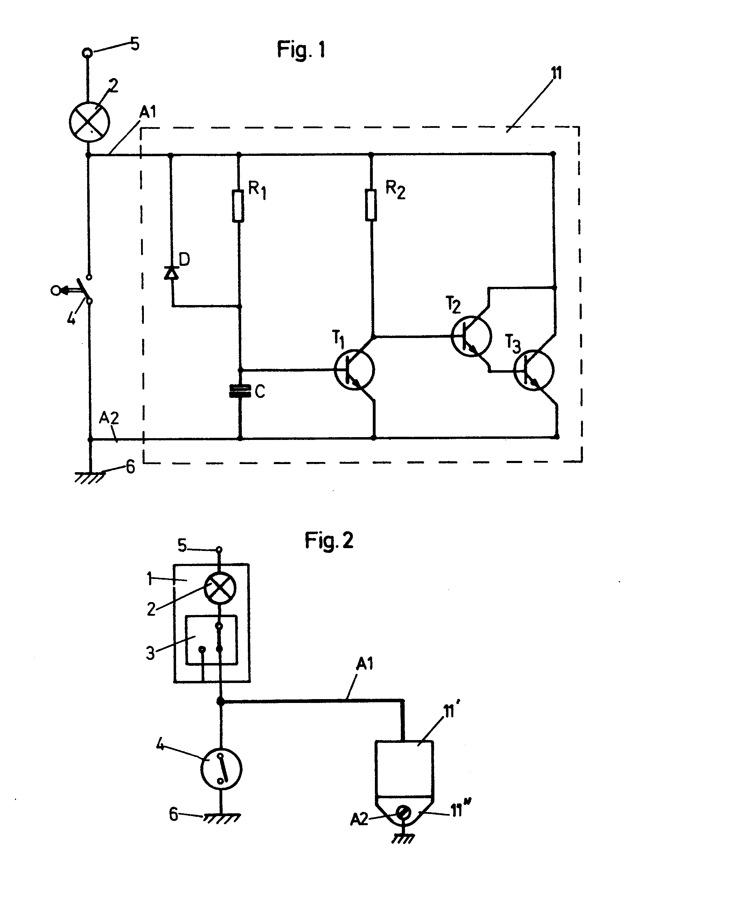

Bei einem Kraftfahrzeug liegt üblicherweise eine
Innenraumbeleuchtung mit einer Lichtquelle (Glühlampe) 2 und einem Handschalter in Reihe zu parallelen Türkontakten 4, von denen in den Figuren nur
einer dargestellt ist. Die Lichtquelle 2 liegt am
Spannungspol 5 einer Batterie. Die Türkontakte 4
liegen am von der Karosserie gebildeten Massepol 6.
Solange eine Tür geschlossen ist, ist der betreffende
Türkontakt 4 geöffnet und umgekehrt. Parallel zu dem
Türkontakt 4 bzw. den Türkontakten ist eine in einem
Gehäuse 11' (vgl. Fig. 2) untergebrachte oder in
einen Block eingegossene Verzögerungsschaltung 11
geschaltet. Es ist ein Schaltungsanschluß A1 und ein
weiterer Anschluß A2 vorgesehen. Der Anschluß A1
wird über eine Leitung mit einem Pol des Türkontakts
4 verbunden. Der Anschluß A2 kann über eine Lasche 11'',

die gleichzeitig zur mechanischen Befestigung des Gehäuses 11' an der Fahrzeugkarosserie dient, mit dem Massepol 6 verbunden werden (vgl. Fig. 2).

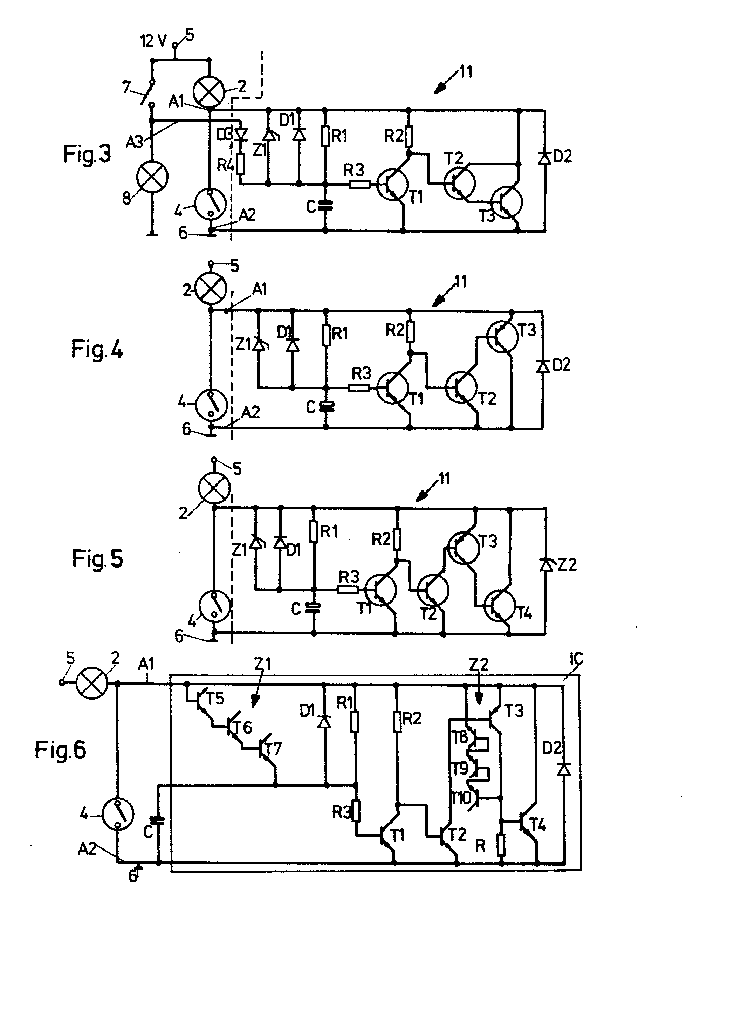

Die Verzögerungsschaltung 11 weist ein RC-Glied, bestehend aus einem Widerstand R1 und einem Kondensator C auf, das parallel zum Türkontakt 4 liegt. Am Spannungspol zwischen dem Widerstand R1 und dem Kondensator C liegt die Basis eines als Schwellwertschalter arbeitenden Transistors T1. Die Reihenschaltung der Kollektor-Emitterstrecke des Transistors T1 und eines Widerstandes R2 liegt parallel zum Türkontakt 4. An den Kollektor des Transistors T1 ist der Steuereingang eines von Transistoren T2 und T3 (Fig. 1, 3, 4) bzw. T2, T3, T4 (Fig. 5, 6, 7) gebildeten Schaltverstärkers angeschlossen. Die Transistoren T2 und T3 sind beim Ausführungsbeispiel nach Fig. 1 und 3 in Darlington-Schaltung geschaltet. Parallel zum Türkontakt 4 liegen die den Ausgang des Schaltverstärkers bildende Kollektor-Emitterstrecke des Transistors T3 bzw. T4 und bei den Ausführungsbeispielen nach den Fig. 3, 4, 6, 7 eine Diode D2 bzw. bei den Ausführungsbeispielen nach den Fig. 5, 6 eine Zenerdiode Z2.

Eine Diode D1 liegt zwischen dem Spannungspol des Kondensators C und dem Türkontakt 4. Parallel zur Diode D1 liegt bei den Ausführungsbeispielen nach den Figuren 3 - 7 eine Zenerdiode Z1.

Die beschriebene Verzögerungsschaltung arbeitet etwa folgendermaßen:

Sobald der Türkontakt 4 durch Öffnen der Tür geschlossen wird, leuchtet die Lichtquelle 2 auf. Der Kondensator C kann sich über die Diode D1 und den geschlossenen Türkontakt 4 entladen. Der Transistor T1 ist gesperrt.

Wird anschließend der Türkontakt 4 durch Schließen der Tür geöffnet, dann fließt über den hochohmigen Widerstand R2 ein Steuerstrom, der die Transistoren T2, T3 bzw. T2, T3, T4 durchschaltet, so daß die Lichtquelle 2 weiterleuchtet. An der Kollektor-Emitterstrecke des Transistors T3 bzw. T4 liegt dabei eine Restspannung von beispielsweise etwa 1 - 1,6 V an. Da diese Spannung parallel zum RC-Glied liegt, wird der Kondensator C aufgeladen. Sobald am Kondensator C die Schaltspannung des Transistors T1 erreicht ist, wird dieser leitend. Dies hat zur Folge, daß die Transistoren T2 und T3 sperren, so daß der durch die Lichtquelle fließende Strom jetzt unterbrochen wird. Diese erlischt. Die Verzögerungszeit zwischen dem Öffnen des Türkontakts und dem Erlöschen der Lichtquelle 2 ist insbesondere durch die Dimensionierung des Widerstandes R1 und des Kondensators C bestimmt. Sie kann beispielsweise 10 s betragen. Der Kondensator C kann klein sein, da er nicht die für den Betrieb der Lichtquelle während der Verzögerungszeit notwendige Energie speichern muß.

Solange der Türkontakt 4 geöffnet bleibt, wird der Kondensator C über die jetzt nicht leuchtende Lichtquelle 2 geladen gehalten. Über den Widerstand R2 und die Kollektor-Emitterstrecke des jetzt leitenden Transistors T1 kann ein Ruhestrom fließen. Dieser wird durch die Dimensionierung des Widerstandes R2 so klein gehalten, daß er praktisch vernachlässigbar ist. Bei den Ausführungsbeispielen nach den Figuren 5 - 7 ist der Ruhestrom gegenüber den Ausführungsbeispielen nach den Figuren 3 und 4 dadurch besonders klein gehalten, daß ein dritter Transistor T4 für den Schaltverstärker vorgesehen ist. Dieser erlaubt es, den Widerstandswert des Widerstands R2 entsprechend zu vergrößern, da der Gesamtverstärkungsfaktor des Schaltverstärkers vergrößert ist und damit zum Durchschalten des Schaltverstärkers nur ein entsprechend kleinerer Steuerstrom erforderlich ist.

Wie sich aus dem Beschriebenen ergibt, ist die bei durchgeschaltetem Transistor T3 bzw. T4 an diesem abfallende, den Kondensator C ladende Restspannung größer, im Beispielsfalle etwa doppelt so groß, wie die Spannung, bei der der Transistor T1 durchschaltet. Die Restspannung muß wesentlich kleiner sein als die Batteriespannung, damit die Lichtquelle 2 bei durchgeschalteten Transistoren T1 und T2 leuchtet. Bei den Ausführungsbeispielen nach den Figuren 1 und 3, bei denen der Schaltverstärker von einem Darlington-Verstärker gebildet ist, muß der über den Widerstand R2 fließende Steuerstrom die Transistoren T2 und T3 durchschalten, deren Basis-Emitterstrecken in Reihe liegen. Dementsprechend ist die Sättigungsspannung des Transistors T3 in Rechnung zu stellen. Es ergibt sich daraus, daß die Restspannung des Schaltverstärkers, die an der Kollektor-Emitterstrecke seines letzten Transistors T3 bzw. T4 im durchgeschalteten Zustand abfällt, in der Größen-

0006129

- 13 -

ordnung von 1,6 V liegt. Bei den Ausführungsbeispielen nach den Figuren 4 - 7 ist die Restspannung
demgegenüber wesentlich reduziert, da in Reihe zum
Widerstand R2 lediglich die Basis-Emitterstrecke des
Transistors T2 liegt, wobei der Schaltverstärker mit
komplementären Transistoren T2, T3 bzw. T4 arbeitet.
Die Restspannung beträgt in diesem Falle etwa 1 V.
Dies hat den Vorteil, daß während der Verzögerungszeit, wenn also der die Lichtquelle 2 speisende
Strom nicht über den Türkontakt 4, sondern über die
Kollektor-Emitterstrecke des Transistors T3 bzw. T4
fließt, an dieser Kollektor-Emitterstrecke eine
kleine Spannung abfällt, die nicht zu einer wesentlichen Reduzierung der Leuchtstärke der Lichtquelle
führt.

Die Zenerspannung der Zenerdiode Z1 ist so ausgelegt,
daß sie größer als die Restspannung des Schaltverstärkers, jedoch kleiner als die Spannung der Batterie des Kraftfahrzeugs ist. Geht man von der üblichen
Batteriespannung einer Batterie eines Personenkraftfahrzeugs von 12 V aus, dann ist beispielsweise eine
Zenerdiode geeignet, deren Zenerspannung 4,7 V beträgt.

Durch die Zenerdiode Z1 in den Figuren 3 - 7 ist
zusätzlich folgendes erreicht:

Wie beschrieben ist das Ende der Verzögerungszeit
durch die Aufladung des Kondensators C über den
Widerstand R1 bestimmt. Dieser Ladevorgang folgt
selbstverständlich der bekannten e-Funktion. Ein
exakter Schaltpunkt lässt sich schwer erreichen, so

- 14 -

daß praktisch ein "schleichender" Übergang zwischen den beiden Schaltzuständen des Transistors T3 bzw. T4 bzw. der Lichtquelle 2 erfolgt. Dies hat insbesondere den Nachteil, daß an sich der Transistor T3 bzw. T4 auf eine hohe Verlustleistung ausgelegt werden müßte. Die Zenerdiode Z1 führt jedoch dazu, daß ab einer gewissen Spannung zusätzlich zu dem über den Widerstand R1 fließenden Ladestrom für den Kondensator C über sie ein weiterer Ladestromanteil für den Kondensator C fließt. Es wird also durch die Zenerdiode Z1 der Ladevorgang beschleunigt, wobei der über die Zenerdiode Z1 fließende Ladestromanteil eine bis zum Durchschalten des Transistors T1 steigende Tendenz zeigt. Dementsprechend schlagartig wird dann auch der Transistor T3 bzw. T4 durchgeschaltet, so daß er nur für eine geringere Verlustleistung dimensioniert zu werden braucht. Im übrigen schaltet auch die Lichtquelle 2 praktisch schlagartig am Ende der Verzögerungszeit ab.

Wie aus der obenbeschriebenen Funktionsweise ersichtlich, muß an sich der Transistor T3 bzw. T4 im Normalfall nur auf denjenigen Strom ausgelegt sein, der über die Glühlampe 2 dann fließt, wenn diese schon leuchtet, wobei - wie bekannt - der Widerstandswert der Glühlampe 2 im warmen Zustand, also beim Leuchten, wesentlich größer ist als im kalten Zustand. Es können bei der Verzögerungsschaltung jedoch einige Einsatzfälle auftreten, bei denen der Transistor T3 bzw. T4 einen wesentlich größeren Strom leiten müßte, als er dem Warmwiderstandswert der leuchtenden Glühlampe entspricht. Beispielsweise ist zu berücksichtigen, daß beim erstmaligen Einbau der Verzögerungsschaltung in das Kraftfahrzeug der Handschalter der Innenraumbeleuchtung geschlossen sein kann, oder daß die Verzögerungsschaltung falsch in das Kraftfahrzeug eingebaut sein kann, oder daß die Batterie des Kraftfahrzeugs neu eingesetzt werden muß, oder daß die Glühlampe 2 einen Kurzschluß aufweist. Dies hätte zur Folge, daß durch die Verzögerungsschaltung ein Strom fließen würde, der wesentlich höher ist als der im Normalfall fließende Strom. In solchen Fällen wird über die Zenerdiode Z1 der Kondensator C sehr schnell - in wenigen µs. aufgeladen und damit der Schaltverstärker T2, T3 bzw. T2, T3, T4 gesperrt. Dessen Transistoren brauchen also nicht auf die ungünstigsten Betriebsfälle ausgelegt zu werden.

Weiterhin ist zu berücksichtigen, daß in dem elektrischen Netz des Kraftfahrzeugs beachtliche Spannungsspitzen auftreten können. Diese können eine Spannung von etwa 150 V erreichen. Solche möglichen Überspannungen gefährden die Transistoren. Durch die Zenerdiode Z1 ist insbesondere erreicht, daß kurzdauernde, beispielsweise 2 µs dauernde, Spannungsspitzen besonders hoher Spannung auf den Kondensator C abgeleitet werden.

Zum weiteren Schutz gegen negative Überspannungen ist in den Ausführungsbeispielen nach den Figuren 3, 4, 6 und 7 die Diode D2 vorgesehen.

In dem Ausführungsbeispiel nach Fig. 5 ist die Diode D2 durch eine Zenerdiode Z2 ersetzt. Die Zenerdiode Z2 leitet nicht nur negative Überspannungen wie die Diode D2, sondern auch relativ lang dauernde, beispielsweise einige ms dauernde, positive Überspannungen ab. Die Zenerspannung der Zenerdiode Z2
wird so gewählt, daß sie größer als die Batteriespannung, jedoch kleiner als die Durchbruchspannung
der Kollektor-Emitterstrecke der Transistoren T1 bis
T4 ist.

Bei den Ausführungsbeispielen nach den Figuren 4 -
7 ist an den Transistor T2 mit NPN-Halbleiterzonenfolge ein Transistor T3 mit PNP-Halbleiterzonenfolge
angeschlossen. Selbstverständlich kann die Schaltung
auch mit Transistoren umgekehrter Halbleiterzonenfolgen aufgebaut werden. Die gewählten Bezeichnungen
der Elektroden der Transistoren sind dann dementsprechend umgekehrt. Die beschriebenen Schaltungen der
Figuren 3 - 7 stellen weder an die Verstärkerfaktoren
der Transistoren noch an deren Sperrspannungen besondere Forderungen, so daß sich die Schaltungen entweder mit billigen Transistoren oder als integrierte
Schaltkreise ohne weiteres aufbauen lassen.

Bei dem Ausführungsbeispiel nach Fig. 6 ist die
Schaltung nach Fig. 5 so dargestellt, daß sie sich
zur Herstellung als integrierter Schaltkreis IC
eignet. Die Zenerdiode Z1 ist dabei durch eine Reihenschaltung der Basis-Emitterstrecken von Transistoren T5, T6 und T7 der integrierten Schaltung IC
nachgebildet. Ähnlich ist die Zenerdiode Z2 durch
eine Reihenschaltung der Basis-Emitterstrecken von
Transistoren T8, T9 und T10 geschaffen, wobei diese
Reihenschaltung die Funktion der Zenerdiode Z2 hinsichtlich der Ableitung positiver Spannungsspitzen
übernimmt. Für die Ableitung negativer Spannungs-

- 17 -

spitzen ist eine Diode D2 vorgesehen. Bei diesem
Schaltkreis IC braucht lediglich der Kondensator C
als separates Bauelement ausgebildet zu werden.

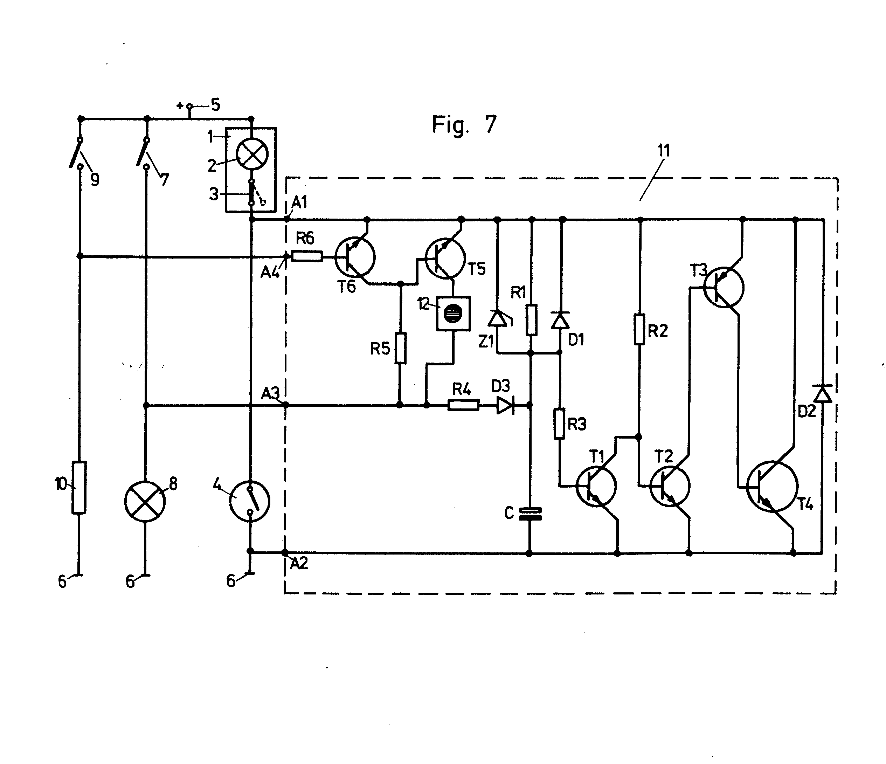

In Fig. 3 und 7 ist zusätzlich ein Schaltkontakt 7
des Kraftfahrzeugs dargestellt, der zum Einschalten
des Standlichts vorgesehen ist, dessen eine Glühlampe 8 gezeigt ist. An dem Schaltkontakt 7 bzw. der
Glühlampe 8 liegt über einen Schaltungsanschluß A3
ein Schaltungszweig, dessen anderes Ende am Spannungspol des Kondensators C liegt. Der Schaltungszweig weist eine Diode D3 und einen Widerstand R4
auf. Die Diode D3 ist so gepolt, daß der Kondensator
C aufgeladen wird, wenn der Schaltkontakt 7 geschlossen ist und damit das Standlicht leuchtet.
Damit ist erreicht, daß der Kondensator C immer dann
geladen gehalten wird, wenn die Scheinwerfer des
Kraftfahrzeugs - insbesondere bei Nacht - eingeschaltet sind. Damit kann in diesem Falle das obenbeschriebene, verzögerte Ausschalten der Innenraumbeleuchtung des Kraftfahrzeugs nicht eintreten. Die
Innenraumbeleuchtung erlischt dann, wenn der Türkontakt 4 durch Schließen der Tür geöffnet wird.

Mit der zuletzt beschriebenen Maßnahme ist erreicht,
daß man die Verzögerungszeit - durch die Dimensionierung des RC-Gliedes R1, C - lang auslegen kann,
da diese lange Verzögerungszeit dann nicht auftritt,
wenn nach dem Zu- oder Aussteigenlassen eines Fahrgastes bei Nacht sofort angefahren werden soll. Es
ist damit umgangen, daß der Fahrer vor dem Anfahren
bei Nacht entweder warten muß, bis die Innenraumbeleuchtung erlischt oder unerlaubterweise bei Nacht einige Sekunden mit eingeschalteter Innenraumbeleuchtung fährt.

Der Schaltungszweig D3, R4 ist zur Vereinfachung nur
bei den Figuren 3 und 7 dargestellt. Selbstverständlich kann der Schaltungszweig auch bei den Ausführungsbeispielen nach den Figuren 1, 4, 5 und 6 vorgesehen sein.

Bei dem Ausführungsbeispiel nach Fig. 7 ist zwischen
dem Spannungspol 5 und dem Massepol 6 die Reihenschaltung eines Zündschloßkontaktes 9 und weiterer
Verbraucher 10 des Kraftfahrzeugs dargestellt.

Die Verzögerungsschaltung 11 ist über die Schaltungsanschlüsse A1, A2, A3 und einen weiteren Schaltungsanschluß A4 an das Bordnetz des Kraftfahrzeugs angeschlossen. Der Anschluß A4 liegt zwischen dem Zündschloßkontakt 9 und den weiteren Verbrauchern 10.
Die Verzögerungsschaltung 11 weist einen in der
Zeichnung akustischen Signalgeber 12 auf. Der Signalgeber 12 kann im Bereich des Armaturenbretts des
Kraftfahrzeugs untergebracht sein.

Zwischen dem Schaltungsanschluß A1 und dem Schaltungsanschluß A3 liegt die Reihenschaltung des Signalgebers 12 und der Kollektor-Emitterstrecke eines
Transistors T5, dessen Basis über einen Widerstand R5
an den Schaltungsanschluß A3 gelegt ist.

Parallel zur Basis-Emitterstrecke des Transistors T5
ist die Kollektor-Emitterstrecke eines Transistors T6
geschaltet, dessen Basis über einen Widerstand R6

- 19 -

mit dem Schaltungsanschluß A4 verbunden ist. Bezüglich der Polaritäten der Transistoren und der Polungsrichtungen der Dioden wird auf die Zeichnung verwiesen.

Die gegenüber dem Beschriebenen zusätzliche Funktion der Schaltung nach Fig. 7 ist folgende:

Solange der Zündschloßkontakt 9 geschlossen ist, ist der Transistor T6 leitend, so daß der Transistor T5 gesperrt ist. In diesem Falle kann bei geschlossenem Lichtschalterkontakt 7 und geschlossenem Türkontakt 4 der Signalgeber 12 kein Signal abgeben. Erst wenn der Zündschloßkontakt 9 geöffnet ist, wird der Transistor T6 gesperrt, so daß der Transistor T5 durchschaltet, wenn der Lichtschalterkontakt 7 und ein Türkontakt 4 geschlossen sind. In diesem Falle gibt der Signalgeber 12 einen Alarmton ab, wenn der Fahrer nach dem Abziehen des Zündschlüssels die Fahrzeugtür öffnet, und das Abschalten der Außenbeleuchtung 8 vergessen hat.

Wenn in Kauf genommen wird, daß der Signalgeber 12 immer dann einschaltet, wenn der Lichtschalterkontakt 7 und ein Türkontakt 4 geschlossen sind, kann der Schaltungsanschluß A4, der Widerstand R6 und der Transistor T6 entfallen. In Fällen, in denen das Eintreten der Abschaltverzögerung der Innenraumbeleuchtung 1 nicht von der Stellung des Lichtschalterkontakts 7 abhängen soll, kann der Schaltungszweig R4, T3 entfallen.

Patentansprüche

1.  Verzögerungsschaltung für eine Innenraumbeleuchtung eines Kraftfahrzeugs, die an die Kraftfahrzeugbatterie angeschlossen ist und über einen Türkontakt einzuschalten ist und bei der zur Festlegung der Verzögerungszeit bis zum Abschalten einer Lichtquelle ein RC-Glied vorgesehen ist, das das Schalten eines in Reihe zur Lichtquelle geschalteten elektronischen Schaltverstärkers steuert, dadurch gekennzeichnet, daß das RC-Glied (R1, C) und der Schaltverstärker (T2, T3), der vom RC-Glied (R1, C) über einen Schwellwertschalter (T1) steuerbar ist, parallel zu einem Türkontakt (4) liegen, wobei die Lichtquelle (2) in Reihe zu dem Türkontakt (4) an die Kraftfahrzeugbatterie angeschlossen ist, daß die beim Öffnen des Türkontakts (4) am durchgeschalteten Schaltverstärker (T2, T3) abfallende Restspannung den Kondensator (C) des RC-Gliedes (R1, C) lädt und daß diese Restspannung einerseits größer als die Schwellwertspannung des Schwellwertschalters (T1) und andererseits so klein ist, daß die Differenzspannung zwischen der Batteriespannung und der Restspannung zum Betrieb der Lichtquelle (2) ausreicht.

2.  Verzögerungsschaltung nach Anspruch 1, dadurch gekennzeichnet, daß zwischen den Türkontakt (4) und den Spannungspol des Kondensators (C) eine Diode (D) geschaltet ist, über die sich der Kondensator (C) beim Schließen des Türkontakts (4) entlädt.

3.  Verzögerungsschaltung nach Anspruch 1 oder 2, dadurch gekennzeichnet, daß der Schwellwertschalter

- 2 -

von einem Transistor (T1) gebildet ist, dessen Basis-Emitterstrecke parallel zum Kondensator (C) liegt und dessen Kollektor an den Steuereingang des Schaltverstärkers (T2, T3) geschaltet ist, und daß an der Basis des Schaltverstärkers (T2, T3) ein Widerstand (R2) liegt, der so hochohmig ausgelegt ist, daß bei gesperrtem Schwellwertschalter (T1) ein zur Durchschaltung des Schaltverstärkers (T2, T3) noch ausreichender Strom fließt.

4.    Verzögerungsschaltung nach einem der vorhergehenden Ansprüche, dadurch gekennzeichnet, daß einer von zwei Anschlüssen (7', 8) der Verzögerungsschaltung ein Massepol ist, der als festes Kontaktstück (7') an einem die Verzögerungsschaltung aufnehmenden Gehäuse oder Gußblock (7) sitzt.

5.    Verzögerungsschaltung nach einem der vorhergehenden Ansprüche, dadurch gekennzeichnet, daß parallel zum Widerstand des RC-Gliedes (R1, C) eine Zenerdiode (Z1) geschaltet ist, deren Zenerspannung größer als die Restspannung des Schaltverstärkers (T2, T3, T4) aber kleiner als die Batteriespannung ist.

6.    Verzögerungsschaltung nach einem der vorhergehenden Ansprüche, dadurch gekennzeichnet, daß parallel zum Schaltverstärker (T2, T3 bzw. T4) eine weitere Diode (D2) oder eine weitere Zenerdiode (Z2) liegt, die entgegen der Durchlaßrichtung des Schaltverstärkers gepolt ist.

7.    Verzögerungsschaltung nach einem der vorhergehenden Ansprüche, bei der eine integrierte Schaltung verwendet ist, dadurch gekennzeichnet, daß die Zenerdiode (Z1) bzw. die Zenerdioden (Z1, Z2) von einer Reihenschaltung von Basis-Emitterstrecken gebildet sind und lediglich der Kondensator (C) ein eigenes Bauelement bildet.

8.    Verzögerungsschaltung nach einem der vorhergehenden Ansprüche, dadurch gekennzeichnet, daß ein dritter Schaltungsanschluß (A3) vorgesehen ist, der an den Verbindungspunkt zwischen einem Lichtschalterkontakt (7) des Kraftfahrzeugs und der diesem zugeordneten Lichtquelle (2) angeschlossen ist, daß zwischen dem ersten, an der Innenraumbeleuchtung (2) liegenden und einem dritten Schaltungsanschluß (A3) ein Signalgeber (12) in Reihe mit der Schaltstrecke eines elektronischen Schalters (T5) liegt, der über den dritten Schaltungsanschluß (A3) gesteuert ist.

9.    Verzögerungsschaltung nach einem der vorhergehenden Ansprüche, dadurch gekennzeichnet, daß zwischen den dritten Schaltungsanschluß (A3) und den Ladekondensator (C) des RC-Gliedes (R1, C) ein Schaltungszweig mit einem Widerstand (R4) und einer Diode (D3) gelegt ist, über den der Ladekondensator (C) zu laden ist.

10.    Verzögerungsschaltung nach einem der vorhergehenden Ansprüche, dadurch gekennzeichnet, daß die Verzögerungsschaltung (11) einen vierten Schaltungsanschluß (A4) aufweist, der am Zündschloß des Kraftfahrzeugs anzuschließen ist und daß zwischen dem vierten (A4) und dem ersten Schaltungsanschluß (A1)

- 4 -

ein weiterer elektronischer Schalter (T6) liegt, der über den vierten Schaltungsanschluß (A4) gesteuert ist und den anderen elektronischen Schalter (T5) steuert, und daß die elektronischen Schalter von Transistoren (T5, T6) gebildet sind, wobei die Kollektor-Emitterstrecke des einen Transistors (T5) in Reihe zum Signalgeber (12) liegt und die Kollektor-Emitterstrecke des anderen Transistors (T6) parallel zur Basis-Emitterstrecke des einen Transistors (T5) geschaltet ist und daß die Basis des einen Transistors (T5) über einen Widerstand (R5) am dritten Schaltungsanschluß (A3) und die Basis des anderen Transistors (T6) über einen Widerstand (R6) am vierten Schaltungsanschluß (A4) liegt.

0006129

Fig. 1

Fig. 2

Fig. 3

Fig. 4

Fig. 5

Fig. 6

0006129

Fig. 7

| Kategorie | EINSCHLÄGIGE DOKUMENTE | | KLASSIFIKATION DER ANMELDUNG (Int.Cl.²) |
|---|---|---|---|
| | Kennzeichnung des Dokuments mit Angabe, soweit erforderlich, der maßgeblichen Teile | betrifft Anspruch | |
| X | <u>DE - A - 2 414 676</u> (DANNER)<br>* Figur 1 *<br><br>-- | 1,4 | **B 60 Q 3/02** |
| | PRACTICAL ELECTRONICS, Vol. 12, Nr. 1<br>5, Mai 1976,<br>London, GB,<br>P. ALBERICCI:"Courtesy light timer"<br>Seite. 418<br>* Figur 1 *<br><br>-- | | |
| X | <u>FR - A - 2 346 933</u> (EXCALIBUR<br>HOLDING S.A.)<br>* Figur 1; Seite 2, Zeile 19 bis<br>Seite 3, Zeile 11 *<br><br>-- | 1,2,4 | **RECHERCHIERTE SACHGEBIETE (Int. Cl.²)**<br><br>B 60 Q 3/02<br>H 05 B 37/00 |
| | ELECTRONICS, Vol. 49, Nr. 14,<br>8. Juli 1976,<br>New York, US,<br>B.D. REDMILE: "Tail-biting one-<br>shot keeps car-door light on"<br>* Figuren *<br><br>----- | 1 | |

Der vorliegende Recherchenbericht wurde für alle Patentansprüche erstellt.

| Recherchenort | Abschlußdatum der Recherche | Prüfer |
|---|---|---|
| Den Haag | 14-09-1979 | ONILLON |

EPA form 1503.1   06.78